Europäisches Patentamt

European Patent Office

Office européen des brevets

(19)

(11) EP 0 485 006 B1

(12) **FASCICULE DE BREVET EUROPEEN**

(45) Date de publication et mention
de la délivrance du brevet:
**13.03.1996 Bulletin 1996/11**

(51) Int Cl.6: **C08F 4/655**, C08F 4/65,
C08F 10/00

(21) Numéro de dépôt: **91202789.3**

(22) Date de dépôt: **29.10.1991**

(54) **Solide catalytique utilisable pour la polymérisation stéréospécifique des alpha-oléfines, procédé pour le préparer et procédé pour polymériser des alpha-oléfines en sa présence**

Im stereospezifischer Alpha-Olefienpolymerisation anwendbares, festes Katalysatorbestandteil, Verfahren zur Herstellung desselben im Alpha-Olefienpolymerisationsverfahren unter Anwendung desselbes

Solid catalyst for use in stereospecific x-olefin polymerization, process of preparation and polymerization process using the same

(84) Etats contractants désignés:
**AT BE CH DE DK ES FR GB GR IT LI LU NL SE**

(30) Priorité: **08.11.1990 BE 9001054**

(43) Date de publication de la demande:
**13.05.1992 Bulletin 1992/20**

(73) Titulaire: **SOLVAY (Société Anonyme)
B-1050 Bruxelles (BE)**

(72) Inventeurs:
- **Costa, Jean-Louis
  B-1850 Grimbergen (BE)**
- **Pamart, Sabine
  B-7000 Mons (BE)**

(74) Mandataire: **Marckx, Frieda et al
Solvay S.A.
Département de la Propriété Industrielle
310, rue de Ransbeek
B-1120 Bruxelles (BE)**

(56) Documents cités:
GB-A- 1 557 329          LU-A- 65 954

**Description**

La présente invention concerne un solide catalytique utilisable pour la polymérisation stéréospécifique des alpha-oléfines, un procédé pour préparer ce solide et un procédé pour la polymérisation des alpha-oléfines en présence de ce solide.

Il est connu de polymériser stéréospécifiquement des alpha-oléfines telles que le propylène au moyen d'un système catalytique comprenant un constituant solide à base de trichlorure de titane et un activateur comprenant un composé organométallique tel qu'un chlorure d'alkylaluminium.

Dans le brevet BE-A-780758 (SOLVAY & Cie), on a décrit des particules de trichlorure de titane complexé dont l'utilisation dans la polymérisation des alpha-oléfines est particulièrement avantageuse. Ces particules se caractérisent par leur structure particulière. Elles sont en effet constituées d'un aggloméré de microparticules qui sont elles-mêmes extrêmement poreuses. Il en résulte que ces particules présentent une surface spécifique et une porosité particulièrement élevées.

Cette structure particulière conduit, en polymérisation, à des performances exceptionnelles. Du fait de la porosité des microparticules développée essentiellement dans des pores de rayons inférieurs à 200 Å, l'activité catalytique est tellement élevée que l'on peut opérer la polymérisation dans des conditions telles que les résidus catalytiques ne doivent plus être éliminés. De plus, étant donné que ces particules ont la forme de grosses sphères régulières, le polymère obtenu se présente également sous la forme de particules sphériques régulières. Il en résulte qu'il est de poids spécifique apparent élevé et qu'il possède une très bonne coulabilité.

Toutefois, ces particules ne conviennent pas bien à la fabrication des copolymères séquencés très résistants aux chocs (dénommés "high impact grades") obtenus en incorporant, dans un homopolymère du propylène préparé dans une première étape, des quantités importantes d'un élastomère propylène-éthylène préparé dans une seconde étape. En effet, la densité élevée et la porosité, essentiellement confinée dans les très petits pores, de ces particules de trichlorure de titane complexé, conduisent à un homopolymère dont la faible porosité, à son tour, ne permet pas d'y incorporer des quantités élevées d'élastomère, engendrant ainsi des problèmes de collage d'autant plus aigus que la quantité d'élastomère à incorporer est importante. Ces problèmes sont particulièrement désagréables dans les procédés de polymérisation effectués selon les techniques les plus récentes, à savoir dans le monomère maintenu à l'état liquide ou en phase gazeuse.

On a tenté de remédier à ces problèmes en fabriquant ces copolymères en présence de constituants catalytiques solides caractérisés par une porosité non inférieure à 0,08 cm³/g dans la zone des rayons de pores compris entre 200 et 15000 Å (demande de brevet EP-A-0202946 (SUMITOMO CHEMICAL)). Les préparations des constituants catalytiques, décrits dans cette demande et répondant à cette caractéristique, sont toutefois compliquées et le mode opératoire choisi prédétermine la porosité obtenue.

On a maintenant trouvé que des solides catalytiques de porosité réglable, et donc aptes à être utilisés pour préparer une vaste gamme de polymères d'alpha-oléfines, peuvent être préparés de manière simple.

La présente invention concerne dès lors, à titre principal, des solides catalytiques à base de trichlorure de titane complexé obtenus par traitement thermique, en présence d'un agent d'activation halogéné, du matériau liquide résultant de la mise en contact de $TiCl_4$, prétraité par un composé électrodonneur, avec une composition (C) correspondant à la formule générale

$$AlR_p (Y)_q X_{3-(p+q)} \qquad (I)$$

dans laquelle

- R représente un radical hydrocarboné;
- Y représente un groupement choisi parmi -OR', - SR' et -NR'R" dans lequel R' et R" représentent chacun un radical hydrocarboné ou un atome d'hydrogène;
- X représente un halogène;

p est un nombre quelconque tel que 0 < p < 3;
q est un nombre quelconque tel que 0 < q < 3, la somme (p + q) étant telle que 0 < (p + q) ≤ 3, ladite mise en contact s'effectuant à une température comprise entre 0 et 60 °C, dans des quantités telles que le rapport atomique entre l'aluminium contenu dans la composition (C) et le titane contenu dans le $TiCl_4$ prétraité est compris entre 0,05 et 10 et ledit traitement thermique s'effectuant à une température de 40 à 130 °C et supérieure à celle de la mise en contact.

Dans la formule (I) de la composition (C), R, R' et R" sont, dans le cas où ils représentent un radical hydrocarboné, généralement choisis chacun et indépendamment l'un de l'autre parmi :

- les radicaux alkyles linéaires ou branchés, contenant de 1 à 12 atomes de carbone, par exemple les radicaux méthyle, éthyle, n-propyle, isopropyle, n-butyle, isobutyle, n-amyle, isoamyle, n-hexyle, 2-éthylhexyle, n-octyle;
- les radicaux alkényles contenant de 2 à 12 atomes de carbone par exemple les radicaux éthényle, 1-buthényle, 2-buthényle, 2-penthén-4-yle, 1-octényle, 1-décényle;
- les radicaux cycloalkyles, éventuellement substitués, contenant de 5 à 12 atomes de carbone, par exemple les radicaux cyclopentyle, cyclohexyle, méthyl cyclohexyle, cyclooctyle;
- les radicaux aryles, éventuellement substitués, contenant de 6 à 35 atomes de carbone, par exemple les radicaux phényle, tolyle, crésyle, xylyle, naphtyle, 2,6-di-tert-butyl-4-méthyl phényle;
- les radicaux arylalkyles contenant de 7 à 20 atomes de carbone, par exemple le radical benzyle.

Dans la formule (I), X est de préférence le chlore; R est choisi de préférence parmi les radicaux alkyles, linéaires ou branchés contenant de 2 à 8 atomes de carbone; Y est choisi de préférence parmi les groupements -OR' dans lesquels R' est un radical alkyle tel que défini ci-dessus ou un radical aryle tel que défini plus haut. Un radical R tout particulièrement préféré est le radical éthyle. Des radicaux R' tout particulièrement préférés sont les radicaux éthyle et isoamyle.

Dans la formule (I), p est de préférence un nombre tel que $1 \leq p \leq 2$ et q de préférence un nombre tel que $0,1 \leq q \leq 2$ et tout particulièrement tel que $0,15 \leq q \leq 0,65$.

Les compositions (C) utilisées pour préparer les solides catalytiques selon l'invention peuvent être des composés chimiques définis ou des mélanges de composés. La formule (I) doit donc être considérée comme une formule de structure brute représentant lesdits composés, ou dans le cas de mélanges, représentant la composition moyenne de ces derniers.

Les compositions (C) utilisées pour préparer les solides catalytiques selon l'invention peuvent être préparées à partir de composés organoaluminiques (A) de formule générale

$$AlR_nX_{3-n} \qquad (II)$$

dans laquelle R et X ont respectivement les significations données ci-avant en rapport avec la formule (I) et dans laquelle n est un nombre quelconque tel que $0 < n \leq 3$, de préférence tel que $1 \leq n \leq 3$.

A titre d'exemples de composés (A), on peut citer les composés alkylés de l'aluminium tels que les trialkylaluminiums, les monohalogénures de dialkylaluminium et les di- et sesquihalogénures d'alkylaluminium dont les radicaux alkyles sont ceux définis et énumérés plus haut.

Des composés (A) préférés sont les chlorures de dialkylaluminium, tout particulièrement le chlorure de diéthylaluminium.

Pour la préparation de la composition (C), le composé (A) peut être mis en contact avec un composé (B) choisi parmi les composés de formule générale :

$$AlR_m(Y)_{m'}X_{3-(m+m')} \qquad (III)$$

$$YH \qquad (IV)$$

et parmi les oligomères de type aluminoxanne se présentant sous formes cyclique et/ou linéaire pouvant être représentés par les formules générales

$$-[Al(R)-O]-_{n'+2} \qquad (V)$$

et

$$R_2Al-O-[Al(R)-O]_{n'}-AlR_2 \qquad (VI)$$

Dans les formules (III), (V) et (VI) ci-dessus, R, Y et X ont respectivement les significations données ci-avant en rapport avec la formule (I). Dans la formule (III), m est un nombre quelconque tel que $0 \leq m < 3$, de préférence tel que $0,5 \leq m \leq 1,5$; m' est un nombre quelconque tel que $0 < m' \leq 3$, de préférence tel que $1 \leq m' \leq 2$; la somme (m + m') étant telle que $0 < (m + m') \leq 3$.

Dans les formules (V) et (VI), n' est un nombre entier généralement compris entre 2 et 50.

A titre d'exemples de composés (B) de formule (III), on peut citer les trialkoxyaluminiums, les alkoxyalkylaluminiums, les halogénures d'alkoxyaluminiums et les halogénures d'alkylalkoxyaluminiums. Des composés (B) de formule (III) qui sont préférés sont les alkylalkoxyaluminiums et leurs chlorures, tout particulièrement le diéthyléthoxyaluminium et les monochlorures d'éthyl-éthoxy- et d'éthylisopentoxyaluminium. A titre d'exemples de composés (B) de formule (IV), on peut citer les alcools, les thioalcools, les phénols, les thiophénols et les amines secondaires. Des composés de formule (IV) qui sont préférés sont les alcools aliphatiques, par exemple le méthanol, l'éthanol, le propanol, l'isopropanol, le butanol, l'isobutanol, le pentanol, le 2-méthyl-1-pentanol (alcool isoamylique), l'hexanol, le 2-éthyl-hexanol, l'octanol. Des alcools tout particulièrement préférés sont l'éthanol et l'alcool isoamylique.

A titre d'exemples de composés (B) de formule (V) et (VI), on peut citer les méthyl-, éthyl- et butylaluminoxannes.

Le composé (A) et le composé (B) définis ci-dessus sont mis en contact dans des proportions propres à l'obtention d'une composition (C) correspondant à la formule (I) ci-avant. Pour ce faire, il y a lieu de tenir compte de la nature respective des composés (A) et (B) mis en oeuvre, ainsi que des éventuelles réactions chimiques pouvant intervenir lors de leur mélange.

La détermination précise des quantités de composés (A) et (B) à mettre en oeuvre peut, dès lors, nécessiter quelques essais de routine préalables.

Un mode opératoire particulièrement préféré et simple de préparation de la composition (C) comprend la mise en contact d'un composé (A) qui est un composé alkylé de l'aluminium avec un composé (B) qui est un alcool aliphatique dans un rapport entre l'aluminium contenu dans le composé (A) et le radical hydrocarboné contenu dans le composé (B) compris entre 1/0,1 et 1/3. Cette mise en contact induit une réaction chimique au moins partielle entre ces composés, entraînant notamment la formation de liaison $= Al - OR'$ et s'accompagnant d'un dégagement gazeux.

Les autres conditions générales de préparation de la composition (C) ne sont pas critiques.

En général, on opère en phase liquide, par exemple en mélangeant entre eux le composé (A) et le composé (B), au moins l'un d'entre eux étant souvent liquide dans des conditions normales de température et de pression. On peut aussi opérer en présence d'un diluant hydrocarboné inerte, généralement choisi parmi les hydrocarbures aliphatiques, cycloaliphatiques et aromatiques liquides, tels que les alkanes et isoalkanes liquides et le benzène. Dans ce cas, la composition (C) est généralement présente dans ce diluant à raison de 1 à 50% en volume , de préférence de 5 à 30 % en volume.

Les composés (A) et (B) peuvent être mis en contact à des températures comprises entre environ 0 et 90°C, de préférence entre 20 et 50°C environ et leur mélange maintenu pendant un temps suffisant pour permettre l'achèvement de toute réaction chimique éventuelle entre eux, généralement compris entre 5 minutes et 48 heures, de préférence entre 2 et 24 heures.

Pour la préparation des solides catalytiques selon l'invention, la composition (C) est mise en contact avec TiCl$_4$, lui-même prétraité par un composé électrodonneur. Ce composé électrodonneur est choisi en général parmi les composés organiques comprenant un ou plusieurs atomes ou groupements présentant une ou plusieurs paires d'électrons libres susceptibles d'assurer la coordination avec le titane. Ces composés présentent de 1 à 30 atomes de carbone par atome ou groupement donneur d'électrons.

Parmi les atomes susceptibles de donner une ou plusieurs paires d'électrons, on peut citer les atomes des non-métaux des groupes V et VI du Tableau Périodique tels que par exemple l'oxygène, le soufre, l'azote, le phosphore, l'antimoine et l'arsenic.

A titre d'exemples représentatifs des composés comprenant des groupements susceptibles de donner une ou plusieurs paires d'électrons, on peut citer les éthers, les thioéthers, les thiols, les phosphines, les stibines, les arsines, les amines, les amides, les cétones et les esters.

De préférence, le composé électrodonneur est choisi dans la famille des éthers aliphatiques, et plus particulièrement parmi ceux dont les radicaux aliphatiques comprennent de 2 à 8 atomes de carbone, de préférence 4 à 6 atomes de carbone. Un exemple typique d'éther aliphatique donnant de très bons résultats est l'éther diisoamylique.

Les conditions générales du traitement du TiCl$_4$ par le composé électrodonneur ne sont pas critiques, pour autant qu'elles induisent une complexation du TiCl$_4$ par le composé électrodonneur. En général, on opère en phase liquide, en ajoutant le composé électrodonneur éventuellement, dissous dans un diluant hydrocarboné inerte tel que défini plus haut, au TiCl$_4$, lui-même sous forme liquide pure ou dissous dans un tel diluant. Lorsqu'il est fait usage d'un diluant, le TiCl$_4$ y est généralement présent à raison de 1 à 50 % en volume, de préférence de 5 à 30 % en volume. Le traitement du TiCl$_4$ par le composé électrodonneur s'effectue à une température généralement comprise entre 0°C et la température d'ébullition du TiCl$_4$ ou de l'éventuel diluant, de préférence entre 5 et 40°C.

Le rapport molaire entre le TiCl$_4$ et le composé électrodonneur peut varier dans de larges mesures. Il est généralement compris entre 0,01 mole et 20 moles de TiCl$_4$ par mole de composé électrodonneur, de préférence entre 0,2 et 10 moles par mole. Les meilleurs résultats ont été obtenus pour des rapports molaires entre le TiCl$_4$ et le composé électrodonneur compris entre 0,3 et 5.

Les conditions générales de mise en contact du TiCl$_4$, prétraité par le composé électrodonneur comme décrit ci-avant (appelé ci-après plus brièvement "TiCl$_4$ prétraité"), avec la composition (C) ne sont pas critiques non plus, pour autant qu'elles conduisent à la formation d'un matériau liquide substantiellement homogène et exempt de solide. En général, on indroduit la composition (C), sous forme liquide pure ou sous forme diluée dans un diluant hydrocarboné inerte tel que défini plus haut, dans le TiCl$_4$ prétraité, lui-même sous forme liquide ou dilué dans un diluant hydrocarboné inerte identique ou différent de celui dans lequel la composition (C) est éventuellement diluée.

La composition (C) et le TiCl$_4$ prétraité sont mis en contact dans des quantités respectives telles qu'il se produise une réduction au moins partielle du TiCl$_4$ sans production substantielle concomittante de précipité solide. A cet effet, la quantité de composition (C) mise en contact avec le TiCl$_4$ prétraité est telle que le rapport atomique entre l'aluminium contenu dans la composition (C) et le titane contenu dans le TiCl$_4$ prétraité est compris entre 0,05 et 10, de préférence entre 0,1 et 8; les meilleurs résultats sont obtenus lorsque ce rapport est compris entre 0,2 et 2.

La température à laquelle est opérée la mise en contact entre la composition (C) et le TiCl$_4$ prétraité est comprise entre 0 et 60°C, de préférence entre 10 et 40°C.

Pour la préparation des solides catalytiques selon l'invention, le matériau liquide obtenu comme indiqué ci-dessus doit être transformé en particules solides. A cet effet, ledit matériau subit un traitement thermique en présence d'un agent d'activation halogéné.

Le traitement thermique du matériau liquide induit la précipitation substantielle de particules de solide à base de trichlorure de titane. Ces conditions sont en général également choisies de manière à conduire à des particules sensiblement sphériques, de granulométrie uniforme et de diamètre moyen compris entre 5 et 150 microns (µm), de préférence entre 10 et 100 µm.

A cet effet, le matériau liquide est porté progressivement d'une température supérieure à la température de mise en contact de la composition (C) avec le TiCl$_4$ prétraité, à une température de 40 à 130°C et qui ne dépasse pas le point d'ébullition du matériau liquide.

La température à laquelle le matériau liquide est chauffé s'étend de préférence de 80 à 120°C environ.

La durée du traitement thermique est généralement comprise entre 5 et 150 minutes, de préférence entre 20 et 120 minutes et tout particulièrement entre 30 et 75 minutes.

Le traitement thermique peut être effectué en élevant la température du matériau liquide de manière continue ou en observant un ou plusieurs paliers pendant la montée en température.

D'autres détails relatifs au traitement thermique de matériaux liquides, apparentés à ceux définis ci-dessus peuvent être trouvés notamment dans le brevet US-A-4115533 (MITSUBISHI CHEMICAL INDUSTRIES) dont le contenu est incorporé par référence dans la présente description.

Selon l'invention, le traitement thermique du matériau liquide s'effectue en présence d'un agent d'activation halogéné. Par "agent d'activation halogéné" on entend désigner tous les agents dont la présence contribue à transformer le trichlorure réduit solide du titane qui se forme au cours du traitement thermique du matériau liquide substantiellement en forme violette stéréospécifique de ce solide.

Ces agents sont généralement choisis parmi les composés halogénés inorganiques, les composés halogénés organiques, les halogénures d'hydrocarbylaluminium, les composés interhalogénés et les halogènes. Parmi ces agents, on peut citer :

- à titre de composés halogénés inorganiques, les halogénures de métaux et de non métaux, tels que les halogénures de titane, de vanadium, de zirconium, d'aluminium, de silicium et de bore par exemple;
- à titre de composés halogénés organiques, les hydrocarbures halogénés tels que les alkanes halogénés et les tétrahalogénures de carbone par exemple;
- à titre d'halogénures d'hydrocarbylaluminium, les dihalogénures d'alkylaluminium dont le radical alkyle contient de 1 à 8 atomes de carbone;
- à titre de composés interhalogénés, les chlorure et bromure d'iode par exemples;
- à titre d'halogène, le chlore, le brome et l'iode.

Des exemples d'agent d'activation convenant très bien sont le tétrachlorure de titane, le tétrachlorure de silicium, l'iodobutane, le monochloréthane, l'hexachloréthane, le chlorométhylbenzène, le tétrachlorure de carbone, le dichlorure d'éthylaluminium, le chlorure d'iode et l'iode. Les meilleurs résultats ont été obtenus avec le tétrachlorure de titane (TiCl$_4$).

L'agent d'activation peut être ajouté au matériau liquide à n'importe quel moment du traitement thermique; il peut, par exemple, être ajouté au début du traitement thermique; il peut aussi, en particulier lorsque des paliers sont observés au cours de la montée en température, être ajouté tout au long du traitement thermique, en particulier au cours d'un de ces paliers.

Lorsqu'il est fait usage de TiCl$_4$ à titre d'agent d'activation, ce TiCl$_4$ peut avantageusement provenir d'un excès non réduit du TiCl$_4$ initial à partir duquel les solides catalytiques selon l'invention sont préparés.

La quantité d'agent d'activation mise en oeuvre est exprimée par rapport à la quantité de trichlorure de titane présente dans le matériau liquide. Elle est généralement comprise entre 0,1 et 20 moles d'agent d'activation par mole de trichlorure de titane, de préférence entre 0,5 et 10 moles par mole. Les meilleurs résultats ont été obtenus lorsque l'agent d'activation est mis en oeuvre à raison de 1 à 5 moles par mole de trichlorure de titane.

Il s'est avéré avantageux de soumettre les particules de solide à base de trichlorure de titane complexé issues du traitement thermique du matériau liquide décrit ci-avant à un mûrissage généralement effectué à la température atteinte à la fin du traitement thermique, pendant une durée généralement comprise entre 15 minutes et 24 heures, de préférence entre 30 minutes et 5 heures.

Les particules de solide à base de trichlorure de titane complexé obtenues selon le procédé décrit ci-avant sont de préférence séparées de leur milieu de préparation, par exemple par filtration, décantation ou centrifugation. Elles sont de préférence lavées ensuite au moyen d'un diluant hydrocarboné inerte de même nature que ceux optionnellement utilisés pour préparer le solide catalytique.

Comme il a été mentionné plus haut, lorsque les conditions opératoires du traitement thermique du matériau liquide ont été ajustées à cet effet, ces particules de solide ont une forme générale sensiblement sphérique, une distribution granulométrique étroite et un diamètre moyen compris de préférence entre 10 et 100 µm. Leur teneur en trichlorure de titane est généralement supérieure à 50 % en poids, de préférence supérieure à 75 % en poids et leur teneur en composé électrodonneur généralement inférieure à 15 % en poids, de préférence inférieure à 10 % en poids, par rapport au poids total des particules.

Un avantage considérable de l'invention réside dans le fait que la porosité des particules de solide catalytique peut être réglée dans une large mesure par le choix de certaines conditions opératoires de leur préparation. Il a ainsi été constaté, en particulier, toutes autres conditions restant sensiblement inaltérées, que l'augmentation de la teneur en groupements Y de la composition (C) conduit à une modification de la porosité des particules de solide catalytique et en particulier à un accroissement de la porosité interne de ces particules générée par des pores dont le rayon est compris entre 1000 et 15000 Å (appelée ci-après plus simplement VPI). Grâce au procédé de fabrication des solides catalytiques selon l'invention, il est donc possible d'ajuster leur porosité, notamment le VPI, depuis des valeurs aussi faibles que 0,02 cm$^3$/g environ jusqu'à des valeurs aussi élevées que 0,4 cm$^3$/g environ.

On constate également que, toutes autres conditions restant sensiblement inaltérées, l'augmentation de la quantité de composition (C) mise en oeuvre conduit, avec un rendement plus élevé, à l'obtention de particules de solide catalytique de plus petite dimension et présentant un volume poreux plus faible.

L'accroissement de la porosité des catalyseurs dans la zone des rayons de pores considérée conduit notamment à des polymères d'alpha-oléfines de porosité croissante, ce qui permet d'y incorporer des quantités élevées et croissantes de produits élastomèriques sans rencontrer de problèmes de collage.

Diverses variantes peuvent être apportées aux procédés de préparation, décrits ci-avant, des solides catalytiques à base de trichlorure de titane complexé selon l'invention sans sortir du cadre de cette dernière.

Une première variante de réalisation (a) consiste à ajouter, au milieu de préparation du solide catalytique à base de TiCl$_3$ complexé, à un moment quelconque, mais de préférence avant le traitement thermique du matériau liquide, un support organique ou inorganique (S) présentant une texture poreuse telle que les particules de solide à base de trichlorure de titane complexé se déposent à la surface du support (S) ou précipitent à l'intérieur des pores de ce dernier. Cette addition peut par exemple s'effectuer avant la mise en contact du TiCl$_4$ prétraité avec la composition (C).

Pour ce faire, on utilise généralement des supports (S) dont le volume poreux est au moins égal à 0,1 cm$^3$/g et de préférence au moins égal à 0,2 cm$^3$/g. Ce volume poreux ne dépasse généralement pas 3,5 cm$^3$/g, de préférence pas 2,5 cm$^3$/g et plus particulièrement pas 2,2 cm$^3$/g. On obtient de bons résultats dès que la surface spécifique des supports (S) est supérieure à 1 m$^2$/g. Le plus souvent la surface spécifique de ces supports est inférieure à 900 m$^2$/g.

Les supports (S) sont généralement constitués de particules de dimension supérieure à 5 µm et plus particulièrement supérieure à 10 µm. En général la dimension des particules des supports (S) n'est pas supérieure à 350 µm et de préférence pas supérieure à 200 µm.

Des supports organiques (S) utilisables sont par exemple des polymères préformés tels que les polymères et copolymères du styrène, les polymères et copolymères du chlorure de vinyle, les polymères et copolymères des esters de l'acide acrylique, les polymères et copolymères d'oléfines contenant de 2 à 18 atomes de carbone, etc.. Des polymères qui conviennent également pour cette utilisation sont les polyacrylonitriles, le polyvinylpyridine, le polyvinylpyrrolidine.

Des supports inorganiques (S) utilisables sont par exemple des solides bien connus comme supports catalytiques tels que les oxydes de silicium, d'aluminium, de magnésium, de titane, de zirconium et leurs mélanges. Parmi ces supports inorganiques (S) on utilise préférentiellement les solides à base d'alumine et de silice ainsi que leurs mélanges.

Les supports (S) utilisés dans cette variante du procédé selon l'invention doivent généralement être inertes vis-à-vis des réactifs utilisés dans la synthèse des solides catalytiques à base de trichlorure de titane complexé décrits ci-avant. Pour ce faire, il peut être préférable de les soumettre, avant leur utilisation, à un traitement thermique destiné à en éliminer toute trace d'humidité résiduelle.

Les solides catalytiques ainsi obtenus présentent un aspect identique à celui des supports utilisés. Leur porosité dépend des conditions de leur préparation et de la nature du support (S) introduit dans le milieu de préparation.

La teneur en trichlorure de titane des solides catalytiques obtenus selon cette variante du procédé selon l'invention est généralement comprise entre environ 7 % et environ 60 % et la teneur en composé électrodonneur est le plus souvent comprise entre environ 1 et environ 10 % en poids par rapport au poids total de solide catalytique.

Cette variante du procédé de préparation des solides catalytiques selon l'invention constitue un autre moyen d'en régler la porosité.

Une seconde variante de réalisation (b) consiste à "prépolymériser" les particules de solide catalytique à base de trichlorure de titane complexé; ce traitement de "prépolymérisation" consiste à mettre ces particules en contact avec une alphamonooléfine inférieure, telle que l'éthylène ou, mieux, le propylène, dans des conditions polymérisantes de manière à obtenir un solide contenant en général entre 5 et 500 % en poids environ d'alpha-monooléfine "prépolymérisée". Cette "prépolymérisation" peut s'effectuer avantageusement sur les particules résultant du traitement thermique du matériau liquide dans un éventuel diluant hydrocarboné inerte tel que défini plus haut pendant une durée suffisante pour obtenir la quantité souhaitée d'alpha-monooléfine prépolymérisée sur le solide.

Une troisième variante de réalisation (c) consiste à soumettre les particules de solide catalytique à base de trichlorure de titane complexé à un traitement d'activation supplémentaire visant à maintenir la stabilité de ses propriétés et/ou visant à augmenter sa stéréospécificité. Ce traitement d'activation supplémentaire consiste à mettre les particules de solide catalytique, de préférence séparées du milieu dans lequel elles ont été préparées en contact avec un agent d'activation supplémentaire choisi parmi les composés organoaluminiques et les produits de la réaction d'un composé organoaluminique avec un composé choisi parmi les composés hydroxyaromatiques dont le groupe hydroxyle est stériquement bloqué. Le composé organoaluminique est choisi de préférence parmi les trialkylaluminiums et les chlorures d'alkylaluminium. Le composé hydroxyaromatique est choisi de préférence parmi les monophénols monocycliques di-tert-alkylés et les monoesters de l'acide 3-(3',5'-di-tert-butyl-4'-hydroxyphényl)-propionique tels que le 3-(3', 5'-di-tert-butyl-4'-hydroxyphényl) propionate de n-octadécyle.

Il est aussi possible de combiner les variantes (b) et (c) décrites ci-dessus, c'est-à-dire de soumettre les particules de solide catalytique au traitement d'activation supplémentaire simultanément au traitement de "prépolymérisation" décrits ci-avant.

On trouvera d'autres détails en rapport avec le traitement d'activation supplémentaire défini ci-dessus, notamment en rapport avec la nature des composés organoaluminiques et hydroxyaromatiques, avec les conditions opératoires dans lesquelles on effectue ce traitement dans les brevets BE-A-803875 (SOLVAY & Cie) et FR-A-2604439 (SOLVAY & Cie) dont le contenu est incorporé par référence dans la présente description.

Pour la polymérisation, le solide catalytique selon l'invention est utilisé conjointement avec un activateur choisi parmi les composés organométalliques de métaux des groupes Ia, IIa, IIb et IIIb du Tableau Périodique (version publiée dans Kirk-Othmer Encyclopedia of Chemical Technology, 2nd completely revised edition, volume 8, 1965, page 94) et de préférence parmi les composés de formule :

$$Al\ R'''_x Z_{3-x}$$

où

- R''' est un radical hydrocarboné contenant de 1 à 18 atomes de carbone et de préférence de 1 à 12 atomes de carbone choisi parmi les radicaux alkyle, aryle, arylalkyle, alkylaryle et cycloalkyle; les meilleurs résultats sont obtenus lorsque R''' est choisi parmi les radicaux alkyles contenant de 2 à 6 atomes de carbone;
- Z est un halogène choisi parmi le fluor, le chlore, le brome et l'iode; les meilleurs résultats sont obtenus lorsque Z est le chlore;
- x est un nombre quelconque tel que $0 < x\ 0 \leq 3$ et de préférence tel que $1,5 \leq x \leq 2,5$; les meilleurs résultats sont obtenus lorsque x est égal à 2.

Le chlorure de diéthylaluminium (DEAC) assure une activité et une stéréospécificité maximales du système catalytique.

On peut également introduire dans le milieu de polymérisation, entre le solide catalytique et l'activateur définis ci-dessus, un terconstituant conventionnellement connu pour améliorer la stéréospécificité du système catalytique.

Ce terconstituant peut être choisi par exemple parmi les éthers, les esters, les amides, et les organosilanes.

Les systèmes catalytiques ainsi définis s'appliquent à la polymérisation des oléfines à insaturation terminale dont la molécule contient de 2 à 18 et de préférence de 2 à 6 atomes de carbone telles que l'éthylène, le propylène, le butène-1, le pentène-1, les méthylbutènes-1, l'hexène, les 3- et 4-méthyl-pentènes-1 et le vinylcyclohexène. Ils sont particulièrement intéressants pour la polymérisation stéréospécifique du propylène, du butène-1 et du 4-méthylpentène-1 en polymères cristallins, qu'ils soient fortement ou faiblement isotactiques. Ils s'appliquent également à la copolymérisation de ces alpha-oléfines avec des comonomères choisis parmi ces alpha-oléfines non identiques et/ou des dioléfines comprenant de 4 à 18 atomes de carbone. De préférence, les dioléfines sont des dioléfines aliphatiques non conjuguées telles que l'hexadiène-1,4, des dioléfines monocycliques non conjuguées telles que le 4-vinylcyclohexène, des dioléfines alicycliques ayant un pont endocyclique telles que le dicyclopentadiène, le méthylène- et l'éthylydènenorbornène et des dioléfines aliphatiques conjuguées telles que le butadiène ou l'isoprène.

Un avantage des systèmes catalytiques selon l'invention est qu'ils permettent, lorsque leur porosité est suffisamment élevée, d'incorporer une fraction plus importante de comonomères.

Ils s'appliquent encore à la fabrication de copolymères appelés à blocs qui sont constitués à partir d'alpha-oléfines et/ou de dioléfines. Ces copolymères à blocs consistent en des blocs distincts de compositions variables; chaque bloc consiste en un homopolymère d'une alpha-oléfine ou en un copolymère statistique comprenant une alpha-oléfine et au moins un comonomère choisi parmi les alpha-oléfines et les dioléfines. Les alpha-oléfines et les dioléfines sont choisies parmi celles mentionnées ci-dessus.

Les solides catalytiques selon l'invention conviennent bien pour la fabrication d'homopolymères du propylène et de copolymères contenant au total au moins 50 % en poids de propylène et de préférence 60 % en poids de propylène. Ils conviennent particulièrement bien pour la fabrication de copolymères à blocs constitués de blocs d'homopolymère cristallin du propylène ou de copolymère statistique contenant au moins 90 % de propylène et de blocs de copolymère statistique contenant de 40 à 70 % molaires de propylène et de 60 à 30 % molaires d'éthylène et relativement riches (plus de 10 % en poids et jusqu'à 70 % en poids par rapport au poids total du copolymère à blocs) en ces derniers blocs.

La polymérisation peut être effectuée selon n'importe quel procédé connu : en solution ou en suspension dans un solvant ou un diluant hydrocarboné inerte, tel que ceux définis en rapport avec la préparation du solide catalytique et qui est de préférence choisi parmi le butane, le pentane, l'hexane, l'heptane, le cyclohexane, le méthylcyclohexane ou leurs mélanges. On peut également opérer la polymérisation dans le monomère ou un des monomères maintenu à l'état liquide ou encore en phase gazeuse.

L'utilisation des solides catalytiques plus poreux selon l'invention est très avantageuse pour la fabrication des copolymères à blocs riches en blocs de copolymère statistique de propylène et d'éthylène définis ci-dessus, surtout dans des procédés de polymérisation en phase gazeuse.

Les systèmes catalytiques selon l'invention permettent, en effet, d'incorporer de grandes quantités de copolymère statistique dans l'homopolymère du propylène.

Or, ce copolymère statistique est généralement un produit amorphe et collant qui, lorsqu'il est présent à l'état libre et en grande quantité, provoque le blocage et le colmatage des réacteurs de polymérisation et ce principalement dans les procédés en phase gazeuse. L'utilisation des systèmes catalytiques selon l'invention y est donc spécialement avantageuse.

La température de polymérisation est choisie généralement entre 20 et 200°C et de préférence entre 50 et 90°C, les meilleurs résultats étant obtenus entre 65 et 85°C. La pression est choisie généralement entre la pression atmosphérique et 50 atmosphères et de préférence entre 10 et 30 atmosphères. Cette pression est bien entendu fonction de la température utilisée.

La polymérisation peut être effectuée en continu ou en discontinu.

La préparation des copolymères dits à blocs peut se faire également selon des procédés connus. On préfère utiliser un procédé en deux étapes consistant à polymériser une alphaoléfine, généralement le propylène, selon la méthode décrite précédemment pour l'homopolymérisation. Ensuite, on polymérise sur le même site catalytique l'autre alpha-oléfine et/ou dioléfine, généralement l'éthylène. Cette seconde polymérisation peut se faire après avoir enlevé complètement ou partiellement le monomère n'ayant pas réagi au cours de la première étape.

Le composé organométallique et le solide catalytique peuvent être ajoutés séparément au milieu de polymérisation. On peut également les mettre en contact, à une température comprise entre - 40° et 80°C, pendant une durée qui est dépendante de cette température et qui peut aller de une heure à plusieurs jours, avant de les introduire dans le réacteur de polymérisation.

La quantité totale de composé organométallique mise en oeuvre n'est pas critique; elle est en général supérieure à 0,1 mmole par litre de diluant, de monomère liquide, ou de volume de réacteur, de préférence supérieure à 0,5 mmole par litre.

La quantité de solide catalytique mise en oeuvre est déterminée en fonction de sa teneur en $TiCl_3$. Elle est choisie en général de manière que la concentration du milieu de polymérisation soit supérieure à 0,01 mmole de $TiCl_3$ par litre de diluant, de monomère liquide ou de volume de réacteur et de préférence supérieure à 0,05 mmole par litre.

Le rapport des quantités de composé organométallique et de solide catalytique n'est pas critique non plus. On le choisit généralement de manière que le rapport molaire composé organométallique/$TiCl_3$ présent dans le solide soit compris entre 0,5 et 20 et de préférence entre 1 et 15. Les meilleurs résultats sont obtenus lorsque le rapport molaire est compris entre 2 et 12.

Le poids moléculaire des polymères fabriqués selon le procédé de l'invention peut être réglé par l'addition au milieu de polymérisation d'un ou plusieurs agents de réglage du poids moléculaire comme l'hydrogène, le diéthylzinc, les alcools, les éthers et les halogénures l'alkyle.

Les exemples suivants servent à illustrer l'invention.

La signification des symboles utilisés dans ces exemples, les unités exprimant les grandeurs mentionnées et les méthodes de mesure de ces grandeurs sont explicitées ci-dessous.

VPI =      volume poreux interne du solide catalytique relevé dans la zone des rayons de pores compris entre 1000 et 15000 Å et exprimé en $cm^3/g$.

$D_m$ =      diamètre moyen des particules de solide catalytique en $\mu m$.

VPF =      volume poreux total du polymère solide recueilli exprimé en $cm^3/g$.

VPS =      volume poreux total du support (s) exprimé en $cm^3/g$.

Ss =      surface spécifique du solide catalytique exprimée en $m^2/g$ (norme britannique BS 4359/1).

Ssu =      surface spécifique du support (S) exprimée en $m^2/g$ (norme britannique BS 4359/1).

$\alpha$ =      activité catalytique exprimée conventionnellement en grammes de polymère insoluble dans le milieu de polymérisation, obtenus par heure et par gramme de $TiCl_3$ contenu dans le solide catalytique. Cette activité est appréciée indirectement à partir de la détermination de la teneur résiduelle en titane dans le polymère par fluorescence X.

PSA =      poids spécifique apparent de la fraction de polymère insoluble exprimé en $g/dm^3$.

fTri =      indice d'isotacticité du polymère, apprécié par la fraction molaire de triades isotactiques (enchaînement séquencé de trois unités monomériques de propylène en configuration méso) dans le polymère total. Cette valeur est déterminée par résonance magnétique nucléaire en $^{13}C$ comme décrit dans Macromolecules, volume 6, n°6, page 925 (1973) et dans les références (3) à (9) de cette publication.

MFI =      indice de fluidité en fondu mesuré sous une charge de 2,16 kg à 230°C et exprimé en g/10min (norme ASTM D 1238).

G =      module de rigidité en torsion du polymère, mesuré à 100°C et pour un angle de torsion de 60° d'arc, la température du moule étant fixée à 70°C et la durée de conditionnement à 5 minutes (normes BS 2782 - Part I - method 150A; ISO 458/1, méthode B; DIN 53447 et ASTM D 1043). Ce module est exprimé en $daN/cm^2$.

Et =      radical éthyle $C_2H_5$.

Isoamyl =      radical isoamyle $(CH_3)_2CH-CH_2-CH_2-$

Le diamètre moyen des particules de solide catalytique est estimé par l'observation au microscope optique de ce solide mis en suspension dans de la décaline (grossissement 200).

La porosité des catalyseurs et celle des polymères obtenus dans les tests de polymérisation décrits ci-après sont mesurées par la méthode de pénétration de mercure au moyen de porosimètres commercialisés par Carlo Erba Co. dans la zone des rayons de pores compris entre 75 et 75000 Å.

La teneur en éthylène des copolymères à blocs est obtenue à partir des signaux caractéristiques de ces unités observés par résonance magnétique nucléaire en $^{13}C$ comme décrit dans Rubber Chemistry and Technology, volume 44 (1971), page 781 et suivantes.

Exemples 1 à 3

A - Préparation des solides catalytiques

1 - Préparation des compositions (C)

Dans un réacteur de 200 ml équipé d'un agitateur à une pale tournant à 400 tr/min. on introduit, sous atmosphère d'azote, 80 ml d'un mélange sec d'hydrocarbures aliphatiques bouillant à 175°C (commercialisé sous le nom de Isopar H par EXXON CHEMICALS) et 17 ml (136 mmole) de chlorure de diéthylaluminium (DEAC).

La température de cette solution étant maintenue inférieure à 50°C, on y additionne goutte à goutte une quantité choisie d'alcool isoamylique, telle que renseignée dans le Tableau I ci-après. La solution est maintenue sous agitation durant 20 heures à température ambiante avant son utilisation.

Les compositions (C) peuvent être représentées par la formule brute Al $Et_p$ $(Oisoamyl)_q$ Cl dont les valeurs des nombres p et q, correspondant aux rapports molaires entre les différents constituants, sont renseignées dans le Tableau I.

2 - Synthèse des solides catalytiques

Dans un autoclave de 1 l muni d'un agitateur à une pale tournant à 250 tr/min, préalablement purgé à l'azote, on introduit 100 ml d'Isopar H et 15 ml de $TiCl_4$.

Cette solution étant maintenue à 30°C, on y additionne, pendant 30 minutes, 69 ml (340 mmole) de di-isoamyl-éther (EDIA). Après cet ajout, 97 ml d'une composition (C) telle que décrite au tableau I, soit 136 mmole d'aluminium, sont introduits dans le $TiCl_4$ "prétraité" endéans la demi-heure. Enfin, 45 ml de $TiCl_4$ sont ajoutés en environ 10 minutes tout en augmentant la température pour atteindre 100°C après 1 heure. Au cours de ce traitement thermique apparaissent les premières particules de solide.

Le milieu réactionnel, constitué d'une suspension de particules, est maintenu à cette température pendant deux heures (mûrissage) puis ramené à température ambiante.

La phase liquide est alors séparée du solide catalytique par décantation et le produit solide (environ 45 g) est lavé à l'hexane par décantations successives puis séché deux heures sous courant d'azote à 70°C.

Les caractéristiques de ces solides catalytiques, de couleur violacée, sont également reprises dans le Tableau I ci-après.

Les particules de solide se présentent sous la forme d'agglomérats sphéroïdaux de grains plus fins disposés en grappes.

B - Polymérisation du propylène en suspension dans le monomère liquide en présence des solides catalytiques (conditions de référence)

Dans un autoclave de 5 l, préalablement séché, on introduit sous balayage d'azote sec:

- 400 mg de DEAC (sous forme d'une solution dans l'hexane à 200 g/l) commercialisé par la firme SCHERING et dont le rapport atomique Cl/Al est ajusté à 1,02 par addition de dichlorure d'éthylaluminium;
- 50 mg de solide catalytique (le rapport molaire entre le DEAC et le $TiCl_3$ présent dans le solide vaut ainsi environ 10);
- de l'hydrogène sous pression partielle d'environ 1 bar;
- 3 l de propylène liquide.

On maintient le réacteur à 65°C sous agitation pendant 3 heures. Ensuite, on dégaze le propylène excédentaire et on récupère le polypropylène (PP) formé se présentant sous forme de grains de morphologie régulière.

Les résultats obtenus au cours des essais de polymérisation avec les différents solides catalytiques sont aussi consignés au Tableau I ci-après.

Tableau I

| Exemples | 1 | 2 | 3 |
|---|---|---|---|
| Préparations des compositions (C) | | | |
| Volume d'alcool (ml) | 3,75 | 7,5 | 9 |
| Formule empirique | Al $Et_p$ (OIsoamyl)$_q$ Cl | | |
| p | 1,75 | 1,5 | 1,4 |
| q | 0,25 | 0,5 | 0,6 |
| Caractérisation des solides catalytiques | | | |
| Teneur en $TiCl_3$ (g/kg) | 805 | 773 | 770 |
| Teneur en aluminium (g/kg) | 1 | 1,2 | 1,3 |
| Teneur en EDIA (g/kg) | 95 | 78 | 62 |
| VPI | 0,043 | 0,06 | 0,08 |
| Ss | 172 | 174 | 90 |
| $D_m$ | 15 - 20 | 10 - 20 | 15 - 25 |
| Résultats en polymérisation | | | |
| Activité $\alpha$ | 4810 | 3835 | 2200 |
| PSA | 366 | 378 | 318 |
| fTri | 91,8 | 91 | 93 |
| G | 605 | 515 | - |
| MFI | 17,2 | 2,9 | 25,1 |
| VPF | 0,06 | 0,1 | 0,17 |

On constate donc que, toutes autres choses étant équivalentes, des teneurs variables en groupements Y dans la composition (C) permettent de régler dans une large mesure la porosité interne des solides catalytiques. On observe, plus particulièrement, une augmentation du volume poreux intermédiaire pour les rayons de pores compris entre 1000 et 15000 Å (VPI) parallèlement à l'augmentation de la teneur en groupements Y.

Exemples 4R et 5R

Ces exemples 4R et 5R sont donnés à titre de comparaison.

## Exemple 4R

Dans un autoclave sec de 1 l, maintenu à 30°C sous atmosphère d'azote, on introduit successivement, sous agitation (agitateur à une pale tournant à 250 tr/min), 100 ml d'Isopar H et 15 ml (136 mmole) de $TiCl_4$. 69 ml d'éther di-isoamylique (340 mmole) sont ensuite ajoutés en 30 minutes. Après cet ajout, une solution constituée de 80 ml d'Isopar H et de 17 ml de DEAC est introduite goutte à goutte en une demi-heure. Enfin, pendant que l'on élève progressivement (en 1 heure) la température de la solution jusqu'à 100°C, on additionne, en 10 minutes, 45 ml (408 mmole) de $TiCl_4$. Le milieu réactionnel est maintenu à cette température pendant deux heures puis ramené à température ambiante, lavé à l'hexane et séché à l'azote sec et chaud. Ce solide contient par kg: 635 g de $TiCl_3$, 12 g d'aluminium et 10 g d'EDIA; son VPI est de 0,29 $cm^3$/g et sa Ss est de 140 $m^2$/g.

On effectue un essai de polymérisation en présence de ce solide catalytique dans des conditions strictement identiques à celles décrites à l'exemple 1, partie B. On récupère à l'issue de cet essai, 115 grammes de polymère ($\alpha = 1280$) se présentant sous la forme de grains de morphologie irrégulière, dont le PSA n'est que de 205 $g/dm^3$.

## Exemple 5R

On prépare un solide catalytique à base de $TiCl_3$ comme décrit à l'exemple 1 mais avec la composition (C) décrite ci-dessous.

La composition (C) est obtenue par mélange de 80 ml d'Isopar H, 8.5 ml (68 mmole) de DEAC et 22,75 ml (136 mmole) d'éther dibutylique (EDBU).

Le solide catalytique contient 799 g/kg de $TiCl_3$, 1,3 g d'aluminium et 86 g d'EDIA; son VPI est de 0,26 $cm^3$/g.

L'essai de polymérisation (conditions : exemple 1, partie B) permet l'obtention, avec une activité $\alpha$ de 1190 seulement, d'un polymère dont l'indice d'isotacticité mesuré par RMN n'est que de 86%.

## Exemples 6 et 7

On prépare des solides catalytiques comme à l'exemple 1 sauf en ce qui concerne l'ajout du $TiCl_4$.

Dans l'exemple 6, le traitement thermique du matériau liquide résultant du contact entre le $TiCl_4$ "prétraité" et la solution (C) s'effectue après l'ajout de la totalité du $TiCl_4$.

Dans l'exemple 7, la totalité du $TiCl_4$, soit 60 ml, est introduite en une fois dès le début de la synthèse du solide catalytique.

Les caractéristiques de ces solides ainsi que les résultats des essais de polymérisation sont rassemblés dans le Tableau II ci-après.

Tableau II

| Exemples | 6 | 7 |
|---|---|---|
| Propriétés des solides catalytiques | | |
| Teneur en $TiCl_3$ (g/kg) | 860 | 776 |
| Teneur en aluminium (g/kg) | 0,8 | 1,2 |
| Teneur en EDIA (g/kg) | 85 | 71 |
| VPI | 0,06 | 0,06 |
| Ss | 159 | 176 |
| Résultats en polymérisation | | |
| activité $\alpha$ | 3835 | 3700 |
| PSA | 376 | 375 |
| fTri | 90 | 92 |
| G | 540 | 625 |
| MFI | 4,2 | 10,4 |
| VPF | 0,11 | 0,09 |

## Exemple 8

Le solide catalytique est préparé suivant le mode opératoire décrit aux exemples 1 à 3, partie A, paragraphe 2 avec la composition (C) obtenue comme décrit ci-après.

Dans un réacteur de 200 ml, préalablement purgé à l'azote sec, on introduit successivement 80 ml d'Isopar H et 18,5 ml de triéthylaluminium (TEAL). Tout en maintenant cette solution à une température inférieure à 50°C, on ajoute, goutte à goutte, 22,5 ml d'alcool isoamylique. La formule brute de cette composition est : Al $Et_{1,5}$ $OIsoamyl_{1,5}$.

Le solide catalytique contient 764 g/kg de $TiCl_3$, 1 g d'aluminium et 71 g d'EDIA; son VPI est de 0,09 $cm^3/g$ et sa surface spécifique de 51 $cm^2/g$.

Utilisé dans le test de polymérisation du propylène en milieu condensé, il conduit, avec une activité $\alpha$ de 2835, à un polypropylène présentant un PSA de 362, un MFI de 7.6, un G de 535 et un indice d'isotacticité mesuré par RMN de 88%. Le VPF du polymère solide est de 0,09.

## Exemple 9

Cet exemple illustre une variante de la synthèse de la composition (C).

Dans un réacteur préalablement séché, on introduit successivement, sous atmosphère d'azote, 80 ml d'Isopar H, 102 mmole de DEAC (12.7 ml) et 34 mmole de chloro-éthoxy-éthylaluminium pour obtenir une composition de formule brute Al $Et_{1,75}$ $OEt_{0,25}$ Cl.

Cette solution est ajoutée à la solution de $TiCl_4$ "prétraité" comme décrit aux exemples 1 à 3, partie A, paragraphe 2, pour former un solide catalytique violacé contenant 792 g de $TiCl_3$, 0,8 g d'aluminium et 63 g d'EDIA par kg de solide et dont le VPI et la Ss sont, respectivement 0,061 $cm^3/g$ et 165 $m^2/g$.

Le $D_m$ des grains de catalyseur est compris entre 15 et 20 µm.

Le test de polymérisation (conditions de référence) permet l'obtention de 350 g de polymère (activité $\alpha$ de 3230) ayant les caractéristiques suivantes:

- PSA = 340 $g/dm^3$
- fTri = 94,8 %
- G = 700 $daN/cm^2$
- MFI = 3 g/10min
- VPF = 0,12 $cm^3/g$

## Exemple 10

Une composition (C), de formule brute Al $Et_{1,65}$ $(OEt)_{0,35}$ Cl est obtenue en faisant réagir, suivant le mode opératoire décrit pour l'exemple 1, 17 ml de DEAC avec 3 ml d'éthanol.

L'obtention du solide catalytique, identique à celle décrite à l'exemple 1, conduit à un solide violet contenant, par kg, 879 g de $TiCl_3$, 0,9 g d'aluminium et 127 g d'EDIA.

Le VPI est de 0,067 $cm^3/g$.

Ce solide catalytique, utilisé dans le test de polymérisation du propylène, dans les conditions de référence, conduit à l'obtention, avec une activité $\alpha$ de 4060, d'un polymère dont le PSA est de 358 et le VPF est de 0,1 $cm^3/g$. Les autres caractéristiques du polypropylène sont: fTri = 92%; MFI = 3,8 et G = 546.

## Exemple 11

### A - Préparation du solide catalytique

### 1 - Préparation de la composition (C)

Dans un réacteur de 2 l équipé d'un agitateur à une pale tournant à 400 tr/min, on introduit sous atmosphère d'azote successivement 800 ml d'Isopar H et 170 ml de DEAC. Ensuite 82 ml d'alcool isoamylique sont introduits goutte à goutte (en une heure) tout en maintenant la température de la solution inférieure à 50°C.

La solution est conservée à température ambiante, sous agitation et sous balayage d'azote, pendant 16 heures avant son utilisation.

Cette composition peut être caractérisée par la formule empirique: Al $Et_{1,45}$ $(OIsoamyl)_{0,55}$ Cl.

### 2 - Synthèse du solide catalytique

Dans un réacteur sec de 5 l équipé d'un agitateur à une pale tournant à 220 tr/min, on introduit 1 l d'Isopar H et 150 ml de $TiCl_4$. Cette solution de $TiCl_4$ étant maintenue à 30°C, on introduit lentement (30 minutes) 690 ml d'EDIA suivis de 970 ml de la composition (C) décrite ci-dessus. L'introduction de la composition (C) se fait pendant 60 minutes. Après avoir réduit la vitesse d'agitation à 85 tr/min, on introduit, tout en augmentant la température pour atteindre 100°C après 50 minutes, 450 ml de TiCl$_4$ en 20 minutes. La suspension est maintenue à 100°C pendant deux heures et le solide formé est isolé par décantation puis lavé 7 fois avec 2 l d'hexane sec.

Ce solide catalytique de couleur violacée contient, par kg, 830 g de TiCl$_3$, 1 g d'aluminium et 58 g d'EDIA. Son VPI est de 0.07.

3 - Prépolymérisation du solide catalytique

La totalité du solide catalytique obtenu selon le point 2 (soit environ 317 g de solide à base de TiCl$_3$ complexé) est mise en suspension dans 1,8 l d'hexane à 30°C, sous une agitation de 150 tr/min.

On introduit lentement (30 minutes) 780 ml d'une solution dans l'hexane d'un préactivant (appelé ci-après préactivant D) préalablement préparé en mélangeant, par litre d'hexane, 80 g de DEAC et 176 g de 3-(3',5'-di-ter-butyl-4'-hydroxy-phényl) propionate de n-octadécyle commercialisé sous la dénomination IRGANOX 1076 par CIBA-GEIGY. Cette solution est mise en oeuvre 15 minutes après le terme du dégagement gazeux observé au cours de sa préparation.

Après cet ajout, 240 ml de propylène sont introduits en trente minutes et la suspension est maintenue sous agitation pendant 30 minutes supplémentaires.

Après décantation, le solide catalytique prépolymérisé résultant est lavé 7 fois au moyen de 2 l d'hexane sec, avec remise en suspension du solide après chaque lavage, puis séché par balayage d'azote en lit fluidisé pendant 2 heures à 70°C.

Le solide catalytique préactivé contient, par kg, 533 g de TiCl$_3$, 8,2 g d'aluminium, 18 g d'EDIA, 228 g de polypropylène ainsi qu'une quantité estimée à 142 g du préactivant D.

Le VPI du catalyseur est de 0,09 cm$^3$/g et sa surface spécifique est de 8 m$^2$/g.

B - Polymérisation du propylène dans le monomère gazeux

Le solide catalytique préactivé est mis en oeuvre dans un essai de polymérisation du propylène comprenant une première étape effectuée dans le monomère liquide et une seconde étape effectuée en phase gazeuse dans les conditions opératoires détaillées ci-après.

Dans un autoclave de 5 l utilisé selon l'exemple 1, partie B, on introduit sous courant d'azote:

- 342 mg d'un activant constitué d'un mélange de DEAC tel qu'utilisé précédemment avec du triéthylaluminium et du benzoate d'éthyle (BE). Les rapports molaires DEAC/BE et TEAL/BE sont respectivement égaux à 60/1 et 2,2/1.
- 35 mg de solide catalytique prépolymérisé (le rapport molaire entre le DEAC et le TiCl$_3$ présent dans le solide vaut ainsi environ 15).

On réalise alors une pression absolue de 2 bars d'hydrogène dans l'autoclave, puis on introduit, sous agitation, 1 l de propylène liquide et l'on élève la température jusqu'à 50°C. On polymérise dans ces conditions pendant 10 minutes. L'autoclave est alors dégazé à une pression de 7 bars absolus tout étant chauffé jusqu'à 75°C. On y réalise alors une pression absolue d'hydrogène de 0,8 bars, puis on introduit du propylène à l'état gazeux jusqu'à atteindre une pression totale à la température considérée de 21 bars absolus. Après 4 heures de polymérisation dans ces conditions, on arrête la réaction par l'introduction de 25 ml d'une solution à 1 mole/l de soude caustique et on récupère, après lavage du polymère par 2 l d'eau, 214 g de polymère sec.

L'activité du solide catalytique est donc de 1820 et la productivité s'élève à 7280 g de polypropylène (PP) par gramme de solide catalytique préactivé. Ce PP présente un MFI de 14,8, un fTri de 97 et VPF égal à 0,15 cm$^3$/g.

Exemple 12

Le solide catalytique prépolymérisé décrit à l'exemple 11 est utilisé dans un essai de polymérisation en deux étapes visant la fabrication d'un copolymère à blocs suivant le mode opératoire décrit ci-après.

Dans un autoclave de 5 l utilisé selon l'exemple 1 partie B, on introduit sous courant d'azote:

- 342 mg d'un activant constitué d'un mélange de DEAC tel qu'utilisé précédemment avec du triéthylaluminium et du benzoate d'éthyle (BE). Les rapports molaires DEAC/BE et TEAL/BE sont respectivement égaux à 60/1 et 2,2/1.
- 35 mg de solide catalytique préactivé (le rapport molaire entre le DEAC et le TiCl$_3$ présent dans le solide vaut ainsi environ 15).

On réalise alors une pression absolue de 2 bars d'hydrogène dans l'autoclave, puis on introduit, sous agitation, 1 l de propylène liquide et l'on élève la température jusqu'à 50°C. On polymérise dans ces conditions pendant 10 minutes. L'autoclave est alors dégazé à une pression de 7 bars absolus tout étant chauffé jusqu'à 75°C. On y réalise ensuite une pression absolue d'hydrogène de 0,6 bars, puis on introduit du propylène à l'état gazeux jusqu'à atteindre une pression totale à la température considérée de 21 bars absolus. Après 2 heures de polymérisation, on dégaze l'autoclave jusqu'à 4,5 bars absolus tout en maintenant la température à 75°C. On y introduit, dans un premier temps, du propylène gazeux de manière à assurer une pression totale dans l'autoclave de 15,4 bars à la température considérée, puis de l'éthylène gazeux pour atteindre une pression totale de 21 bars absolus. On copolymérise le propylène avec l'éthylène pendant 140 minutes tout en alimentant en continu l'autoclave par un mélange de propylène et d'éthylène gazeux à la composition du copolymère formé de manière à maintenir constante la composition du milieu de polymérisation.

La polymérisation est arrêtée par l'introduction de 25 ml d'une solution à 1 mole/l de soude caustique et on récupère, avec une activité $\alpha$ de 1433, 360 g de polymère présentant une bonne coulabilité dont les caractéristiques sont les suivantes:

MFI =    0,61
G =       185
VPF =    0,04

La proportion d'élastomère dans le polymère total s'élève à 59 % en poids; la teneur en éthylène du polymère total est de 265 g/kg.

Exemple 13

Cet exemple illustre une variante de la synthèse de la composition (C).
Le solide catalytique est préparé comme à l'exemple 1 mais en remplaçant les 7,5 ml d'alcool isoamylique par 8,5 ml de 3-méthyl-1-butanethiol.
La caractérisation du solide catalytique ainsi que celle du polypropylène obtenu dans un essai de référence sont décrites dans le Tableau III ci-après.

Tableau III

| Propriétés des solides catalytiques | |
| --- | --- |
| Teneur en TiCl$_3$ (g/kg) | 847 |
| Teneur en aluminium (g/kg) | 0,7 |
| Teneur en EDIA (g/kg) | 90 |
| VPI | 0,095 |
| Ss | 90 |
| Résultats en polymérisation | |
| activité $\alpha$ | 1970 |
| PSA | 310 |
| fTri | 92 |
| MFI | 6,1 |
| VPF | 0,07 |

Exemples 14 à 17

Ces exemples illustrent la préparation de solides catalytiques en présence d'un support organique ou inorganique (S).

A - Préparation des solides catalytiques

1 - Préparation des compositions (C)

Dans un ballon de 100 ml préalablement conditionné sous azote, on introduit 30 ml d'Isopar H et 5,7 ml de DEAC. Cette solution étant maintenue sous agitation à 40°C, on y additionne goutte à goutte 1,2 ml d'alcool isoamylique en trente minutes environ. La solution ainsi obtenue est maintenue sous agitation pendant 12 heures avant son utilisation.

2. Synthèse des solides catalytiques

La nature et la quantité des supports (S) mis en oeuvre dans ces synthèses, leurs caractéristiques et les traitements thermiques auxquels ils sont préalablement soumis sont renseignés dans le tableau IV ci-après.

Dans un autoclave de 1 litre muni d'un agitateur à une pale tournant à 250 tr/min, préalablement purgé à l'azote, on introduit successivement 160 ml d'Isopar H, 23 ml de di-isoamyléther et la quantité choisie (telle que renseignée dans le tableau IV) de support (S). 20 ml de TiCl$_4$ sont ensuite ajoutés en 30 minutes à cette suspension.

Cette suspension étant maintenue à 30°C, on y additionne endéans l'heure 35,7 ml de la composition (C) décrite ci-avant. On augmente alors la température pour atteindre 100°C après 1 h.

Le milieu réactionnel est maintenu à cette température pendant deux heures puis ramené à température ambiante.

La phase liquide est alors séparée du solide catalytique par décantation et le produit solide est lavé à l'hexane par décantations successives puis séché 1 heure sous courant d'azote à 70°C.

Le solide catalytique ainsi obtenu présente un aspect identique à celui du support; sa couleur est violette. Le tableau IV ci-après reprend également les caractéristiques des solides catalytiques obtenus ainsi que leur performances dans le test de polymérisation dans le monomère liquide dans les conditions de référence (exemple 1, partie B).

## Tableau IV

| Exemples | 14 | 15 | 16 | 17 |
|---|---|---|---|---|
| **Caractéristiques des supports (S)** | | | | |
| type | | Silice | Alumine | polymère* |
| nom commercial | SG 532 | SAEHS 33-50 | KETJEN 13 | CHROMOSORB 101 |
| Firme | GRACE | CARBORUNDUM | AKZO | Jhons-Manville Co Ltd |
| VPS | 0,6 | 0,33 | 1 | 0,9 |
| Ssu | 320 | 3 | 301 | 41 |
| **Traitement thermique du support (S)** | | | | |
| Température (°C) | 800 | 800 | 800 | 80 |
| durée (h) | 16 | 16 | 16 | 1 |
| **Quantité de support (S) mise en oeuvre** | | | | |
| (g) | 25 | 90 | 25 | 25 |
| **Caractéristiques des solides catalytiques** | | | | |
| Teneur en TiCl$_3$ (g/kg) | 363 | 134 | 350 | 118 |
| Teneur en EDIA (g/kg) | 89 | 16 | 50 | 46 |
| VPI | 0,01 | 0,10 | 0,12 | 0,05 |
| Ss | 243 | 33 | 204 | – |
| Dm | 20-200 | 10-150 | – | – |
| **Résultats en polymérisation** | | | | |
| Activité α | 2800 | 3980 | 3450 | 3340 |
| PSA | 395 | 359 | 442 | 330 |
| fTri | 89 | 90 | 90 | 91 |
| G | 445 | 500 | 575 | – |
| MFI | 2,9 | 4,1 | 6,1 | 4 |
| VPF | 0,08 | 0,30 | 0,12 | 0,14 |

* comprenant un copolymère styrène-divinylbenzène

**Revendications**

1. Solide catalytique à base de trichlorure de titane complexé, utilisable pour la polymérisation stéréospécifique des alpha-oléfines, caractérisé en ce qu'il est obtenu par traitement thermique, en présence d'un agent d'activation halogéné, du matériau liquide résultant de la mise en contact de $TiCl_4$, prétraité par un composé électrodonneur, avec une composition (C) correspondant à la formule générale

$$AlR_p \, (Y)_q \, X_{3-(p+q)} \tag{I}$$

   dans laquelle

   - R représente un radical hydrocarboné;
   - Y représente un groupement choisi parmi -OR', -SR' et -NR'R" dans lesquels R' et R" représentent chacun un radical hydrocarboné ou un atome d'hydrogène;
   - X représente un halogène;
   - p est un nombre quelconque tel que $0 < p < 3$;
   - q est un nombre quelconque tel que $0 < q < 3$;
     la somme $(p + q)$ étant telle que $0 < (p + q) \leq 3$,
     ladite mise en contact s'effectuant à une température comprise entre 0 et 60 °C, dans des quantités telles que le rapport atomique entre l'aluminium contenu dans la composition (C) et le titane contenu dans le $TiCl_4$ prétraité est compris entre 0,05 et 10 et ledit traitement thermique s'effectuant à une température de 40 à 130 °C et supérieure à celle de la mise en contact.

2. Solide catalytique suivant la revendication 1, caractérisé en ce que, dans la formule générale (I) :

   - R représente un radical alkyle linéaire ou branché contenant de 2 à 8 atomes de carbone;
   - Y représente un groupement -OR', dans lequel R' est choisi parmi les radicaux alkyles linéaires ou branchés contenant de 1 à 12 atomes de carbone et les radicaux aryles contenant de 6 à 35 atomes de carbone;
   - X représente le chlore;
   - p est un nombre tel que $1 \leq p \leq 2$;
   - q est un nombre tel que $0,1 \leq q \leq 2$.

3. Solide catalytique suivant la revendication 1 ou 2, caractérisé en ce que le composé électrodonneur est choisi parmi les éthers aliphatiques.

4. Solide catalytique suivant les revendications 1 à 3, caractérisé en ce que l'agent d'activation halogéné est choisi parmi les composés halogénés inorganiques.

5. Solide catalytique suivant la revendication 4, caractérisé en ce que l'agent d'activation halogéné est le $TiCl_4$.

6. Solide catalytique suivant l'une quelconque des revendications 1 à 5, caractérisé en ce qu'il est obtenu en ajoutant au milieu de préparation dudit solide, à un moment quelconque, un support organique ou inorganique (S).

7. Solide catalytique suivant la revendication 6, caractérisé en ce que le support (S) est ajouté avant le traitement thermique du matériau liquide.

8. Solide catalytique suivant l'une quelconque des revendications 6 et 7, caractérisé en ce que le support (S) est un polymère organique préformé.

9. Solide catalytique suivant l'une quelconque des revendications 6 et 7 caractérisé en ce que le support (S) est choisi parmi les composés oxygénés tels que les oxydes de silicium, d'aluminium, de magnésium, de titane, de zirconium et leurs mélanges.

10. Procédé pour la préparation d'un solide catalytique à base de trichlorure de titane complexé, utilisable pour la polymérisation stéréospécifique des alpha-oléfines, caractérisé en ce que l'on soumet le matériau liquide résultant de la mise en contact de $TiCl_4$ prétraité par un composé électrodonneur, avec une composition (C) correspondant à la formule générale

$$AlR_p (Y)_q X_{3-(p+q)} \tag{I}$$

dans laquelle

- R représente un radical hydrocarboné;
- Y représente un groupement choisi parmi -OR', -SR' et NR'R" dans lesquels R' et R" représentent chacun un radical hydrocarboné ou un atome d'hydrogène;
- X représente un halogène;
- p est un nombre quelconque tel que $0 < p < 3$;
- q est un nombre quelconque tel que $0 < q < 3$;
  la somme (p + q) étant telle que $0 < (p + q) \leq 3$, à un traitement thermique effectué en présence d'un agent d'activation halogéné,
  à une température de 40 à 130 °C et supérieure à celle de la mise en contact et ladite mise en contact étant effectuée à une température comprise entre 0 et 60 °C et dans des quantités telles que le rapport atomique entre l'aluminium contenu dans la composition (C) et le titane contenu dans le $TiCl_4$ prétraité est compris entre 0,05 et 10.

11. Procédé suivant la revendication 10, caractérisé en ce que la quantité de composition (C) mise en contact avec le $TiCl_4$ prétraité est telle que le rapport atomique entre l'aluminium contenu dans la composition (C) et le titane contenu dans le $TiCl_4$ prétraité est compris entre 0,1 et 8.

12. Procédé suivant la revendication 10, caractérisé en ce que le traitement thermique est effectué dans des conditions induisant la précipitation substantielle de particules de solide à base de trichlorure de titane.

13. Procédé suivant la revendication 10, caractérisé en ce que l'agent d'activation halogéné est ajouté au début du traitement thermique.

14. Procédé suivant la revendication 10, caractérisé en ce que l'agent d'activation halogéné est du $TiCl_4$ provenant d'un excès non réduit du $TiCl_4$ initial.

15. Procédé suivant l'une quelconque des revendications 10 à 14, caractérisé en ce que la quantité d'agent d'activation mise en oeuvre est comprise entre 0,5 et 10 moles par mole de trichlorure de titane présent dans le matériau liquide.

16. Procédé suivant l'une quelconque des revendications 10 à 15, caractérisé en ce que le traitement thermique est suivi d'un mûrissage, généralement effectué à la température atteinte à la fin du traitement thermique et pendant une durée comprise entre 15 minutes et 24 heures.

17. Procédé suivant l'une quelconque des revendications 10 à 16, caractérisé en ce que l'on ajoute au milieu de préparation dudit solide, à un moment quelconque un support organique ou inorganique (S).

18. Procédé pour la polymérisation des alpha-oléfines en présence d'un système catalytique comprenant un activateur choisi parmi les composés organométalliques de métaux des groupes Ia, IIa, IIb et IIIb du Tableau Périodique et un solide catalytique à base de trichlorure de titane complexé, caractérisé en ce que ledit solide est obtenu par traitement thermique, en présence d'un agent d'activation halogéné, du matériau liquide résultant de la mise en contact de $TiCl_4$, prétraité par un composé électrodonneur, avec une composition (C) correspondant à la formule générale

$$AlR_p (Y)_q X_{3-(p+q)} \tag{I}$$

dans laquelle

- R représente un radical hydrocarboné;
- Y représente un groupement choisi parmi -OR', -SR' et NR'R" dans lesquels R' et R" représentent chacun un radical hydrocarboné ou un atome d'hydrogène;
- X représente un halogène;
- p est un nombre quelconque tel que $0 < p < 3$;
- q est un nombre quelconque tel que $0 < q < 3$;
  la somme (p + q) étant telle que $0 < (p + q) \leq 3$, ladite mise en contact s'effectuant à une température comprise entre 0 et 60 °C dans des quantités telles que le rapport atomique entre l'aluminium contenu dans la composition (C) et le titane contenu dans le $TiCl_4$ prétraité est compris entre 0,05 et 10 et ledit traitement thermique s'effectuant à une température de 40 à 130 °C et supérieure à celle de la mise en contact.

19. Procédé suivant la revendication 18, caractérisé en ce que le solide catalytique est obtenu en ajoutant au milieu de préparation dudit solide, à un moment quelconque un support organique ou inorganique (S).

20. Procédé suivant l'une quelconque des revendications 18 et 19, caractérisé en ce que l'activateur est choisi parmi les composés de formule :

$$Al\ R'''\ _xZ_{3-x}$$

dans laquelle

- R''' est un radical hydrocarboné contenant de 1 à 18 atomes de carbone;
- Z est un halogène;
- x est un nombre quelconque tel que 0 < x ≤ 3.

21. Procédé suivant l'une quelconque des revendications 18 et 19, appliqué à la polymérisation stéréospécifique du propylène.

22. Procédé suivant l'une quelconque des revendications 18 et 19, appliqué à la polymérisation stéréospécifique du propylène en suspension dans un diluant hydrocarboné inerte.

23. Procédé suivant l'une quelconque des revendications 18 et 19, appliqué à la polymérisation stéréospécifique du propylène dans le monomère à l'état liquide.

24. Procédé suivant l'une quelconque des revendications 18 et 19, appliqué à la polymérisation stéréospécifique du propylène en phase gazeuse.

25. Procédé suivant l'une quelconque des revendications 18 et 19, appliqué à la fabrication, en phase gazeuse, de copolymères à blocs constitués de blocs d'homopolymère cristallin du propylène et de blocs de copolymère statistique contenant de 40 à 70 % molaires de propylène et de 60 à 30 % molaires d'éthylène.

26. Procédé suivant la revendication 25, caractérisé en ce que la teneur en blocs homopolymère constitue de 30 à 90 % en poids du polymère total.


**Patentansprüche**

1. Für die stereospezifische Polymerisation von alpha-Olefinen verwendbarer katalytischer Feststoff auf der Basis von komplexiertem Titantrichlorid, dadurch gekennzeichnet, daß er in Gegenwart eines halogenhaltigen Aktivierungsmittels durch thermische Behandlung der Flüssigkeit erhalten wird, die aus dem Inkontaktbringen von $TiCl_4$, das mit einer Elektronendonorverbindung vorbehandelt ist, mit einer Zusammensetzung (C), die der allgemeinen Formel

$$AlR_p(Y)_qX_{3-(p+q)} \tag{I}$$

entspricht, in der

- R einen Kohlenwasserstoffrest darstellt;
- Y eine Gruppe darstellt, die unter -OR', -SR' und -NR'R", in denen R' und R" beide einen Kohlenwasserstoffrest oder ein Wasserstoffatom darstellen, ausgewählt ist;
- X ein Halogen darstellt;
- p eine beliebige Zahl ist, so daß 0 < p < 3;
- q eine beliebige Zahl ist, so daß 0 < q < 3;
  wobei die Summe (p + q) so ist, daß 0 < (p + q) ≤ 3,
  hervorgeht, wobei sich besagtes Inkontaktbringen bei einer Temperatur zwischen 0 und 60 °C in solchen Mengen vollzieht, daß das Atomverhältnis zwischen dem in der Zusammensetzung (C) enthaltenen Aluminium und dem in dem vorbehandelten $TiCl_4$ enthaltenen Titan zwischen 0,05 und 10 liegt, und sich besagte thermische Behandlung bei einer Temperatur von 40 bis 130 °C, die höher als diejenige des Inkontaktbringens ist, vollzieht.

2. Katalytischer Feststoff gemäß Anspruch 1, dadurch gekennzeichnet, daß in der allgemeinen Formel (I):

- R einen linearen oder verzweigten Alkylrest mit 2 bis 8 Kohlenstoffatomen darstellt;
- Y eine -OR'-Gruppe darstellt, in der R' unter den linearen oder verzweigten Alkylresten mit 1 bis 12 Kohlenstoffatomen und den Arylresten mit 6 bis 35 Kohlenstoffatomen ausgewählt ist;
- X Chlor darstellt;
- p eine Zahl ist, so daß $1 \leq p \leq 2$;
- q eine Zahl ist, so daß $0,1 \leq q \leq 2$.

3. Katalytischer Feststoff gemäß Anspruch 1 oder 2, dadurch gekennzeichnet, daß die Elektronendonorverbindung unter den aliphatischen Ethern ausgewählt ist.

4. Katalytischer Feststoff gemäß den Ansprüchen 1 bis 3, dadurch gekennzeichnet, daß das halogenhaltige Aktivierungsmittel unter den anorganischen Halogenverbindungen ausgewählt ist.

5. Katalytischer Feststoff gemäß Anspruch 4, dadurch gekennzeichnet, daß das halogenhaltige Aktivierungsmittel $TiCl_4$ ist.

6. Katalytischer Feststoff gemäß einem der Ansprüche 1 bis 5, dadurch gekennzeichnet, daß er durch Hinzufügen eines organischen oder anorganischen Trägers (S) zu einem beliebigen Zeitpunkt zum Herstellungsmedium des Feststoffs erhalten wird.

7. Katalytischer Feststoff gemäß Anspruch 6, dadurch gekennzeichnet, daß der Träger (S) vor der thermischen Behandlung der Flüssigkeit zugefügt wird.

8. Katalytischer Feststoff gemäß einem der Ansprüche 6 und 7, dadurch gekennzeichnet, daß der Träger (S) ein vorab gebildetes organisches Polymer ist.

9. Katalytischer Feststoff gemäß einem der Ansprüche 6 und 7, dadurch gekennzeichnet, daß der Träger (S) unter den Sauerstoffverbindungen wie Silizium-, Aluminium-, Magnesium-, Titan- und Zirkoniumoxid und deren Mischungen ausgewählt ist.

10. Verfahren zur Herstellung eines für die stereospezifische Polymerisation von alpha-Olefinen verwendbaren katalytischen Feststoffs auf der Basis von komplexiertem Titantrichlorid, dadurch gekennzeichnet, daß man die Flüssigkeit, die aus dem Inkontaktbringen von $TiCl_4$, das durch eine Elektronendonorverbindung vorbehandelt ist, mit einer Zusammensetzung (C), die der allgemeinen Formel

$$AlR_p(Y)_q X_{3 - (p+q)} \tag{I}$$

entspricht, in der

- R einen Kohlenwasserstoffrest darstellt;
- Y eine Gruppe darstellt, die unter -OR', -SR' und -NR'R'', in denen R' und R'' beide einen Kohlenwasserstoffrest oder ein Wasserstoffatom darstellen, ausgewählt ist;
- X ein Halogen darstellt;
- p eine beliebige Zahl ist, so daß $0 < p < 3$;
- q eine beliebige Zahl ist, so daß $0 < q < 3$;
  wobei die Summe $(p + q)$ so ist, daß $0 < (p + q) \leq 3$, hervorgeht, einer thermischen Behandlung unterzieht, die in Gegenwart eines halogenhaltigen Aktivierungsmittels bei einer Temperatur von 40 bis 130 °C, die höher als diejenige des Inkontaktbringens ist, ausgeführt wird, wobei das besagte Inkontaktbringen bei einer Temperatur zwischen 0 und 60 °C und in solchen Mengen ausgeführt wird, daß das Atomverhältnis zwischen dem in der Zusammensetzung (C) enthaltenen Aluminium und dem in dem vorbehandelten $TiCl_4$ enthaltenen Titan zwischen 0,05 und 10 liegt.

11. Verfahren gemäß Anspruch 10, dadurch gekennzeichnet, daß die Menge der Zusammensetzung (C), die mit dem vorbehandelten $TiCl_4$ in Kontakt gebracht wird, so ist, daß das Atomverhältnis zwischen dem in der Zusammensetzung (C) enthaltenen Aluminium und dem in dem vorbehandelten $TiCl_4$ enthaltenen Titan zwischen 0,1 und 8 liegt.

12. Verfahren gemäß Anspruch 10, dadurch gekennzeichnet, daß die thermische Behandlung unter Bedingungen ausgeführt wird, die den wesentlichen Niederschlag von Feststoffteilchen auf der Basis von Titantrichlorid bewirken.

13. Verfahren gemäß Anspruch 10, dadurch gekennzeichnet, daß das halogenhaltige Aktivierungsmittel am Anfang der thermischen Behandlung zugesetzt wird.

14. Verfahren gemäß Anspruch 10, dadurch gekennzeichnet, daß das halogenhaltige Aktivierungsmittel $TiCl_4$ ist, das aus einem nicht reduzierten Überschuß von Ausgangs-$TiCl_4$ stammt.

15. Verfahren gemäß einem der Ansprüche 10 bis 14, dadurch gekennzeichnet, daß die Menge des eingesetzten Aktivierungsmittels zwischen 0,5 und 10 Mol pro Mol in der Flüssigkeit vorhandenem Titantrichlorid liegt.

16. Verfahren gemäß einem der Ansprüche 10 bis 15, dadurch gekennzeichnet, daß der thermischen Behandlung ein Reifen folgt, das im allgemeinen bei der Temperatur, die am Ende der thermischen Behandlung erreicht wird, und während einer Dauer zwischen 15 Minuten und 24 Stunden ausgeführt wird.

17. Verfahren gemäß einem der Ansprüche 10 bis 16, dadurch gekennzeichnet, daß man zu einem beliebigen Zeitpunkt einen organischen oder anorganischen Träger (S) zu dem Herstellungsmedium des besagten Feststoffs hinzufügt.

18. Verfahren zur Polymerisation von alpha-Olefinen in Gegenwart eines katalytischen Systems, das einen Aktivator, der unter den organometallischen Verbindungen der Metalle der Gruppen Ia, IIa, IIb und IIIb des Periodensystems ausgewählt ist, und einen katalytischen Feststoff auf der Basis von komplexiertem Titantrichlorid umfaßt, dadurch gekennzeichnet, daß besagter Feststoff in Gegenwart eines halogenhaltigen Aktivierungsmittels durch thermische Behandlung der Flüssigkeit erhalten wird, die aus dem Inkontaktbringen von $TiCl_4$, das mit einer Elektronendonorverbindung vorbehandelt ist, mit einer Zusammensetzung (C), die der allgemeinen Formel

$$AlR_p(Y)_qX_{3-(p+q)} \qquad \text{(I)}$$

entspricht, in der

- R einen Kohlenwasserstoffrest darstellt;
- Y eine Gruppe darstellt, die unter -OR', -SR' und -NR'R", in denen R' und R" beide einen Kohlenwasserstoffrest oder ein Wasserstoffatom darstellen, ausgewählt ist;
- X ein Halogen darstellt;
- p eine beliebige Zahl ist, so daß $0 < p < 3$;
- q eine beliebige Zahl ist, so daß $0 < q < 3$;
  wobei die Summe $(p + q)$ so ist, daß $0 < (p + q) \leq 3$, hervorgeht, wobei sich besagtes Inkontaktbringen bei einer Temperatur zwischen 0 und 60°C in solchen Mengen vollzieht, daß das Atomverhältnis zwischen dem in der Zusammensetzung (C) enthaltenen Aluminium und dem in dem vorbehandelten $TiCl_4$ enthaltenen Titan zwischen 0,05 und 10 liegt, und sich besagte thermische Behandlung bei einer Temperatur von 40 bis 130 °C, die höher als diejenige des Inkontaktbringens ist, vollzieht.

19. Verfahren gemäß Anspruch 18, dadurch gekennzeichnet, daß der katalytische Feststoff durch Hinzufügen eines organischen oder anorganischen Trägers (S) an einem beliebigen Zeitpunkt zum Herstellungsmedium des besagten Feststoffs erhalten wird.

20. Verfahren gemäß einem der Ansprüche 18 und 19, dadurch gekennzeichnet, daß der Aktivator unter den Verbindungen der Formel:

$$Al\,R'''_x\,Z_{3-x}$$

in der

- R''' ein Kohlenwasserstoffrest mit 1 bis 18 Kohlenstoffatomen ist;
- Z ein Halogen ist;
- x eine beliebige Zahl ist, so daß $0 < x \leq 3$,
  ausgewählt ist.

21. Verfahren gemäß einem der Ansprüche 18 und 19, das auf die stereospezifische Polymerisation von Propylen angewendet wird.

22. Verfahren gemäß einem der Ansprüche 18 und 19, das auf die stereospezifische Polymerisation von Propylen in Suspension in einem inerten Kohlenwasserstoff-Lösungsmittel angewendet wird.

23. Verfahren gemäß einem der Ansprüche 18 und 19, das auf die stereospezifische Polymerisation von Propylen im flüssigen Monomeren angewendet wird.

24. Verfahren gemäß einem der Ansprüche 18 und 19, das auf die stereospezifische Polymerisation von Propylen in der Gasphase angewendet wird.

25. Verfahren gemäß einem der Ansprüche 18 und 19, das auf die Herstellung von Blockcopolymeren, die aus Blöcken von kristallinem Propylenhomopolymer und aus Blöcken von statistischem Copolymer, das 40 bis 70 Mol-% Propylen und 60 bis 30 Mol-% Ethylen enthält, bestehen, in der Gasphase angewendet wird.

26. Verfahren gemäß Anspruch 25, dadurch gekennzeichnet, daß der Gehalt an Blockhomopolymer 30 bis 90 Gew.-% des Gesamtpolymers bildet.

## Claims

1. Catalytic solid based on titanium trichloride complex, usable for the stereospecific polymerisation of alpha-olefins, characterised in that it is obtained by heat treatment, in the presence of a halogenated activating agent, of the liquid material resulting from bringing $TiCl_4$, pretreated with an electron-donor compound, into contact with a composition (C) corresponding to the general formula

$$AlR_p \, (Y)_q \, X_{3-(p+q)} \qquad (I)$$

in which

- R represents a hydrocarbon radical;
- Y represents a group chosen from -OR', -SR' and -NR'R", in which R' and R" each represent a hydrocarbon radical or a hydrogen atom;
- X represents a halogen;
- p is an arbitrary number such that $0 < p < 3$; and
- q is an arbitrary number such that $0 < q < 3$;
  the sum (p + q) being such that $0 < (p + q) \leq 3$,
  the said bringing into contact being carried out at a temperature of between 0 and 60 °C, in amounts such that the atomic ratio between the aluminium contained in the composition (C) and the titanium contained in the pretreated $TiCl_4$ is between 0.05 and 10 and the said heat treatment being carried out at a temperature from 40 to 130 °C and higher than the temperature of the bringing into contact.

2. Catalytic solid according to Claim 1, characterised in that, in the general formula (I):

- R represents a straight-chain or branched alkyl radical containing from 2 to 8 carbon atoms;
- Y represents a group -OR', in which R' is chosen from straight-chain or branched alkyl radicals containing from 1 to 12 carbon atoms and aryl radicals containing from 6 to 35 carbon atoms;
- X represents chlorine;
- p is a number such that $1 \leq p \leq 2$; and
- q is a number such that $0.1 \leq q \leq 2$.

3. Catalytic solid according to Claim 1 or 2, characterised in that the electron-donor compound is chosen from aliphatic ethers.

4. Catalytic solid according to Claims 1 to 3, characterised in that the halogenated activating agent is chosen from inorganic halogenated compounds.

**5.** Catalytic solid according to Claim 4, characterised in that the halogenated activating agent is $TiCl_4$.

**6.** Catalytic solid according to any one of Claims 1 to 5, characterised in that it is obtained by adding an organic or inorganic support (S) at any time to the mixture for the preparation of the said solid.

**7.** Catalytic solid according to Claim 6, characterised in that the support (S) is added before the heat treatment of the liquid material.

**8.** Catalytic solid according to either of Claims 6 and 7, characterised in that the support (S) is a preformed organic polymer.

**9.** Catalytic solid according to either of Claims 6 and 7, characterised in that the support (S) is chosen from oxygen-containing compounds such as the silicon, aluminium, magnesium, titanium and zirconium oxides and their mixtures.

**10.** Process for the preparation of a catalytic solid based on titanium trichloride complex, usable for the stereospecific polymerisation of alpha-olefins, characterised in that the liquid material resulting from bringing $TiCl_4$, pretreated with an electron-donor compound, into contact with a composition (C) corresponding to the general formula

$$AlR_p \, (Y)_q \, X_{3-(p+q)} \qquad\qquad (I)$$

in which

- R represents a hydrocarbon radical;
- Y represents a group chosen from -OR', -SR' and -NR'R", in which R' and R" each represent a hydrocarbon radical or a hydrogen atom;
- X represents a halogen;
- p is an arbitrary number such that $0 < p < 3$; and
- q is an arbitrary number such that $0 < q < 3$;
  the sum $(p + q)$ being such that $0 < (p + q) \leq 3$, is subjected to a heat treatment carried out in the presence of a halogenated activating agent at a temperature from 40 to 130 °C and higher than the temperature of the bringing into contact and the said bringing into contact being carried out at a temperature of between 0 and 60 °C, in amounts such that the atomic ratio between the aluminium contained in the composition (C) and the titanium contained in the pretreated $TiCl_4$ is between 0.05 and 10.

**11.** Process according to Claim 10, characterised in that the amount of composition (C) brought into contact with the pretreated $TiCl_4$ is such that the atomic ratio between the aluminium contained in the composition (C) and the titanium contained in the pretreated $TiCl_4$ is between 0.1 and 8.

**12.** Process according to Claim 10, characterised in that the heat treatment is carried out under conditions inducing the substantial precipitation of particles of solid based on titanium trichloride.

**13.** Process according to Claim 10, characterised in that the halogenated activating agent is added at the start of the heat treatment.

**14.** Process according to Claim 10, characterised in that the halogenated activating agent is $TiCl_4$ originating from a non-reduced excess of the initial $TiCl_4$.

**15.** Process according to any one of Claims 10 to 14, characterised in that the amount of activating agent used is between 0.5 and 10 mol per mole of titanium trichloride present in the liquid material.

**16.** Process according to any one of Claims 10 to 15, characterised in that the heat treatment is followed by ageing generally carried out at the temperature reached at the end of the heat treatment and for a period of generally between 15 minutes and 24 hours.

**17.** Process according to any one of Claims 10 to 16, characterised in that an organic or inorganic support (S) is added at any time to the mixture for the preparation of the said solid.

**18.** Process for the polymerisation of alpha-olefins in the presence of a catalytic system comprising an activator chosen from the organometallic compounds of metals of groups Ia, IIa, IIb and IIIb of the periodic table and a catalytic solid based on titanium trichloride complex, characterised in that the said solid is obtained by heat treatment, in the presence of a halogenated activating agent, of the liquid material resulting from bringing $TiCl_4$, pretreated with an electron-donor compound, into contact with a composition (C) corresponding to the general formula

$$AlR_p\,(Y)\,_q\,X\,_{3-(p+q)} \tag{I}$$

in which

- R represents a hydrocarbon radical;
- Y represents a group chosen from -OR', -SR' and -NR'R", in which R' and R" each represent a hydrocarbon radical or a hydrogen atom;
- X represents a halogen;
- p is an arbitrary number such that $0 < p < 3$; and
- q is an arbitrary number such that $0 < q < 3$;
    the sum $(p + q)$ being such that $0 < (p + q) \le 3$,
    the said bringing into contact being carried out at a temperature of between 0 and 60 °C, in amounts such that the atomic ratio between the aluminium contained in the composition (C) and the titanium contained in the pretreated $TiCl_3$ is between 0.05 and 10 and the said heat treatment being carried out at a temperature from 40 to 130 °C and higher than the temperature of the bringing into contact

19. Process according to Claim 18, characterised in that the catalytic solid is obtained by adding an organic or inorganic support (S) at any time to the mixture for the preparation of the said solid.

20. Process according to either of Claims 18 and 19, characterised in that the activator is chosen from the compounds of formula:

$$Al\,R'''\,_x Z_{3-x}$$

in which

- R''' is a hydrocarbon radical containing from 1 to 18 carbon atoms;
- Z is a halogen; and
- x is any number such that $0 < x \le 3$.

21. Process according to either of Claims 18 and 19, applied to the stereospecific polymerisation of propylene.

22. Process according to either of Claims 18 and 19, applied to the stereospecific polymerisation of propylene in suspension in an inert hydrocarbon diluent.

23. Process according to either of Claims 18 and 19, applied to the stereospecific polymerisation of propylene in the monomer in the liquid state.

24. Process according to either of Claims 18 and 19, applied to the stereospecific polymerisation of propylene in the gas phase.

25. Process according to either of Claims 18 and 19, applied to the production, in the gas phase, of copolymers containing blocks consisting of crystalline propylene homopolymer blocks and blocks of statistical copolymer containing from 40 to 70 mol% of propylene and from 60 to 30 mol% of ethylene.

26. Process according to Claim 25, characterised in that the content of homopolymer blocks makes up 30 to 90% by weight of the total polymer.